# EUROPÄISCHE PATENTSCHRIFT

(11) **EP 0 762 021 B1**
(45) Veröffentlichungstag und Bekanntmachung des Hinweises auf die Patenterteilung: **22.12.1999**
(21) Anmeldenummer: 96110879.2
(22) Anmeldetag: 05.07.1996
(51) Int. Cl.: F16J 15/32

(54) **Lippendichtring**
Lip seal
Joint à lèvres

(30) Priorität: 05.09.1995 DE 19532701
(43) Veröffentlichungstag der Anmeldung: 12.03.1997
(73) Patentinhaber: Firma Carl Freudenberg, 69469 Weinheim (DE)
(72) Erfinder: Carnis, Patrick, 52200 Langres (FR); Pataille, Gilbert, 52200 Corlee (FR)

(56) Entgegenhaltungen:
- GB-A- 2 096 246
- US-A- 3 941 393
- US-A- 4 723 350

## Beschreibung

Lippendichtring für ein relativ bewegbares Maschinenteil, umfassend eine flexible Dichtlippe aus polymerem Werkstoff, die den Maschinenteil im Bereich eines Dichtspalts unter einer elastischen Vorspannung anliegend berührt, wobei der Dichtspalt an zumindest einer Umfangsstelle von einer Drallstufe in Längsrichtung durchdrungen ist, die der Achse des Maschinenteils unter einem spitzen Winkel zugeordnet ist.

Ein solcher Dichtring ist aus der US-PS 3,985,487 bekannt. Er ist für die Abdichtung einer um eine Achse rotierenden Welle bestimmt und weist eine Dichtlippe auf, die aus einer kreisringförmigen Scheibe mit planparallelen Oberflächen erzeugt ist, aus PTFE besteht und im Bereich ihres Innenumfangs in axialer Richtung nach Art des Schalltrichters einer Trompete vorgewölbt ist. Der vorgewölbte Abschnitt zeigt während der bestimmungsgemäßen Verwendung in Richtung des abzudichtenden Raums. Seine Innenseite berührt die Oberfläche der abzudichtenden Welle unter einer elastischer Vorspannung. Sie ist mit einer schraubengangförmig verlaufenden Drallstufe versehen, die einen Bestandteil einer Drallnut bildet. Nach der Montage des Lippendichtrings auf dem Außenumfang einer rotationssymetrischen Welle ergibt sich im Bereich der Drallnut eine Lücke, die den abzudichtenden Raum mit der Umgebung verbindet und den Zweck hat, den Dichtspalt passierende Leckflüssigkeit durch sich bei rotierender Welle ergebende, hydrodynamische Kräfte in den abgedichteten Raum zurückzufördern. Dazu schließt die Drallstufe mit der Achse der Welle einen spitzen Winkel ein, der so geneigt ist, daß Leckflüssigkeit bei rotierender Welle in Richtung des abgedichteten Raumes zurückgeschleudert wird.

Der bekannte Lippendichtring wird in vielen Fällen unter Verwendung von automatischer Montageeinrichtungen montiert. Dabei kann es vorkommen, daß sich die Dichtlippe durch unvorhersehbare Einflüsse umstülpt und im Bereich ihres Innenumfangs nicht in Richtung des abzudichtenden Raums zeigt, wie vorgeschrieben, sondern in Richtung der Umgebung. Auf diese Weise läßt sich kein befriedigendes Abdichtungsergebnis erzielen. Es ist daher erforderlich, jeden einzelnen Lippendichtring im Anschluß an seine Montage daraufhin zu überprüfen, ob der Lippenring in Richtung des abzudichtenden Raums zeigt oder nicht. Insbesondere in Einbaupositionen, in denen die Einbaustelle schwer einzusehen ist, ist das auf manuellem Wege schwierig. Es ist daher üblich, den abgedichteten Raum im Anschluß an die Montage des Lippendichtrings mit Druckluft eines vorgegebenen Kontrolldruckes zu füllen und den Druckabfall während einer bestimmten Zeitspanne zu beobachten. Ergibt sich ein sehr schneller Druckabfall, so ist das ein sicheres Zeichen dafür, daß sich die Dichtlippe während des Einbaus des Lippendichtrings umgestülpt hat und zumindest nicht die vorgeschriebene Zuordnung zur Oberfläche der abzudichtenden Welle aufweist.

Die Anwendung der Druckprüfung hat sich in bezug auf die Kontrolle von Lippendichtungen als wenig befriedigend erwiesen, bei denen der Dichtspalt an zumindest einer Umfangsstelle von einer Drallstufe in Längsrichtung durchbrochen ist, die der Achse des Maschinenteils unter einem mehr oder weniger spitzen Winkel zugeordnet ist.

Der Erfindung liegt die Aufgabe zugrunde, einen mit zumindest einer Drallstufe versehene Lippendichtring derart weiterzuentwickeln, daß eine nach dem Einbau vorliegende, fehlerhafte Einbaulage unter Verwendung der Druckprüfung sicher erkannt werden kann.

Zur Lösung dieser Aufgabenstellung sind erfindungsgemäß bei einem Lippendichtring der eingangs genannten Art die kennzeichnenden Merkmale von Anspruch 1 vorgesehen. Auf vorteilhafte Ausgestaltungen nehmen die Unteransprüche Bezug.

Bei dem erfindungsgemäßen Lippendichtring ist es vorgesehen, daß die Lücke, die sich im Bereich der Drallstufe nach dem Einbau des Lippendichtringes ergibt, im Bereich des Dichtspalts durch Wachs verschlossen ist. Als Folge dieser Maßnahme kann durch die Lücke während der Durchführung der Druckprüfung keine Druckluft mehr entweichen. Fehlerhaft eingebaute Lippendichtringe lassen sich dadurch wesentlich präziser und schneller erkennen als bisher.

Wenn in Umfangsrichtung mehrere aufeinander folgende Drallstufen vorgesehen sind oder eine sinusförmig verlaufende Drallstufe den Dichtspalt in Umfangsrichtung mehrfach berührt oder durchschneidet ist es erforderlich, jede in Umfangsrichtung vorhandene Lücke im Bereich von Drallstufen bzw. jede weitere Unterbrechung des Dichtspaltes durch eine oder dieselbe Drallstufe durch das Wachs zu verschließen. Unabhängig von der Anzahl der vorhandenen Drallstufen wird auf diese Weise während der Durchführung der Druckprüfung stets ein hermetischer Abschluß des abzudichtenden Raums im Bereich des Dichtspaltes erreicht. Eine neue Justierung der Kontrolleinrichtung beim Übergang von der Kontrolle einer Ausführung eines Lippendichtrings mit nur einer Drallstufe auf die Kontrolle einer anderen Ausführung mit mehreren Drallstufen ist somit nicht mehr erforderlich.

Die durch die Drallstufen im Bereich des Dichtspaltes gebildten Lücken können einen sehr geringen Querschnitt von wenigen Hundertstel Quardratmillimetern haben. Die Menge des zum Verschließen des Dichtspalts benötigten Wachses kann dementsprechend gering bemessen sein. Sie kann überdosiert sein, ohne daß Funktionsstörungen zu erwarten sind.

Als besonders geeignet hat sich die Verwendung künstlicher oder natürlicher Wachse erwiesen. Letztere können pflanzlichen, tierischen oder fossilen Ursprungs sein. Wachse haben im allgemeinen einen Schmelzpunkt zwischen 50 und 90°. Die Lücken, welche sich im Bereich der Drallstufen zwischen einem Lippenring und einer Welle ergeben, lassen sich leicht durch Wachse vollständig verschließen, d.h. in einem solchen Maße, daß sich eine Innenkontur ergibt, die einer gedachten Zylinderfläche oder zumindest einer rotationssymmetrischen Fläche weitgehend entspricht. Eine solche Fläche vermag sich an eine abzudichtende Welle problemlos dichtend anzuschmiegen. Die bleibende Verformbarkeit von Wachsen ist dafür von großer Bedeutung.

Wachse haften auf allen gebräuchlichen, polymeren Dichtungswerkstoffen hinreichend fest für eine Duchführung der Druckprüfung. Die Verwendung von Paraffin- oder Stearinwachs wird im Rahmen der vorliegenden Erfindung bevorzugt. Die Schmelztemperatur beträgt etwa 55°C. Sie wird durch die sich bei drehender Welle unter Normalbedingungen ergebende Reibungswärme im Bereich des Dichtspalts erreicht und überschritten, mit der Folge, daß sich das Wachs verflüssigt und durch die sich während der bestimmungsgemäßen Verwendung ergebenden, hydrodynamischen Effekte aus dem Dichtspalt entfernt und in Richtung des abzudichtenden Raums gefördert wird. Es ist darauf zu achten, daß das abzudichtende Medium und das Wachs derart afueinander abgestimmt sind, daß die Gebrauchseigenschaften des abzudichtenden Mediums nach dem Vermischen mit dem Wachs nicht nachteilig beeinflußt werden. Die Drallstufe ist anschließend frei von Wachs und in vollem Maße wirksam.

Die Erfindung kann bei Drallstufen beliebiger Art zur Anwendung gelangen, die den Dichtspalt in irgend einer Weise berühren. Die Drallstufen können beispielsweise in der Dichtlippe und/oder dem Maschinenteil, beispielsweise einer um ihre Achse rotierbaren Welle, angebracht sein und beispielsweise einen Bestandteil von Drallnuten bilden. Darüberhinaus können Drallstufen vorgesehen sein, die einander überschneidende Drallrippen oder Drallnuten begrenzen sowie Ausführungen, die napfförmig gestaltete Eintiefungen begrenzen. Wichtig ist in allen Fällen, daß in Umfangsrichtung der Dichtlippe zumindest eine Prallfläche vorhanden ist, die die durch die rotierende Welle mitgeführte Schleppströmung in Richtung des abgedichteten Raumes umlenkt. Eine solche Prallfläche setzt eine stufenartige Unterbrechung der ansonsten ringförmig ausgebildeten Dichtlippe voraus, d.h. eine Drallstufe. Diese Abweichung von der gedachten Fortsetzung der Kreisform bedingt die Leckage bei der Druckprüfung einer Dichtung, die nicht die Merkmale der erfindungsgemäßen Ausführung aufweist. Sie wird im Sinne der Erfindung ausgeglichen durch das temporär im Bereich der Abweichung aufgetragene Wachs.

Wachse haben bereits bei einer Temperatur von ca. 20°C eine teigartig verformbare Konsistenz. Es ist daher nicht erforderlich, das im Sinne der Erfindung aufzutragende Wachs besonders fein zu dosieren oder nachträglich im Bereich der Oberfläche zu glätten. Die zur Abdichtung des Dichtspaltes erforderliche Anpassung an die Oberlfäche der abzudichtenden Welle und des Lippenrings ergibt sich vielmehr bereits unter Anwendung der geringen Kräfte, die für eine normale Anpressung der Dichtlippe zur Verfügung stehen.

Wachse haben darüberhinaus den Vorteil, chemisch nicht zu altern oder ihre Konsistenz während der Lagerung eines Dichtringes bei Raumtemperatur so zu verändern, daß die Abdichtung eines Dichtspaltes nach der ordnungsgemäßen Montage eines Dichtringes nicht mehr gelingt. Ihre Anwendung ist insofern denkbar einfach.

Wachse vermischen sich nicht unter nachteiliger Veränderung der Schmiereigenschaften mit Öl. Sie können unter Verwendung üblicher Filter aus einem Schmieröl ausgeschieden werden.

Als vorteilhaft hat es sich bewährt, wenn die Drallstufe die dem Maschinenteil zugewandte Dichtfläche der Dichtlippe unterbricht. Das Verschließen einer der Drallstufe vorgelagerten Lücke durch Wachs kann bei einer solchen Ausführung in den Herstellungsprozeß des Lippendichtrings integriert sein, was die Klärung von Haftungsfragen vereinfacht.

Die Drallstufe oder die Drallstufen können das abzudichtende Maschinenteil nach Art einer Helix oder von Kreissegmenten zumindest teilweise in Umfangsrichtung umschließen. Insbesondere in Anwendungsfällen, in denen die Dichtlippe aus PTFE besteht hat es sich als vorteilhaft bewährt, die einer Drallstufe bzw. Drallstufen vorgelagerte Lücke bzw. Lücken im Sinne der Erfindung zur Durchführung der Druckprüfung mit Wachs zu verschließen. Der Grund hierfür dürfte darin bestehen, daß es sich bei PTFE im Gegensatz zu Gummi um ein Material mit hornartiger Konsistenz handelt, das eine so große Zähigkeit besitzt, daß die die Oberfläche einer abzudichtenden Welle berührenden Drallstufen nicht ohneweiteres so weitgehend deformiert werden, daß die vorgelagerten Lücken durch die elastischen Deformierungen verschlossen werden, die aus der üblichen Anpressung einer solchen Dichtlippe an ein abzudichtendes Maschinenteils resultieren.

Der Gegenstand der Erfindung wird nachfolgend durch die in der Anlage beigefügten Zeichnungen weiter verdeutlicht.

Es zeigen:
- Fig. 1: ein Lippendichtring der erfindungsgemäßen Art in einer geschnittenen Darstellung.
- Fig. 2: einen Ausschnitt aus der Dichtlippe des Lippendichtrings gemäß Fig. 1 in vergrößerter Darstellung.

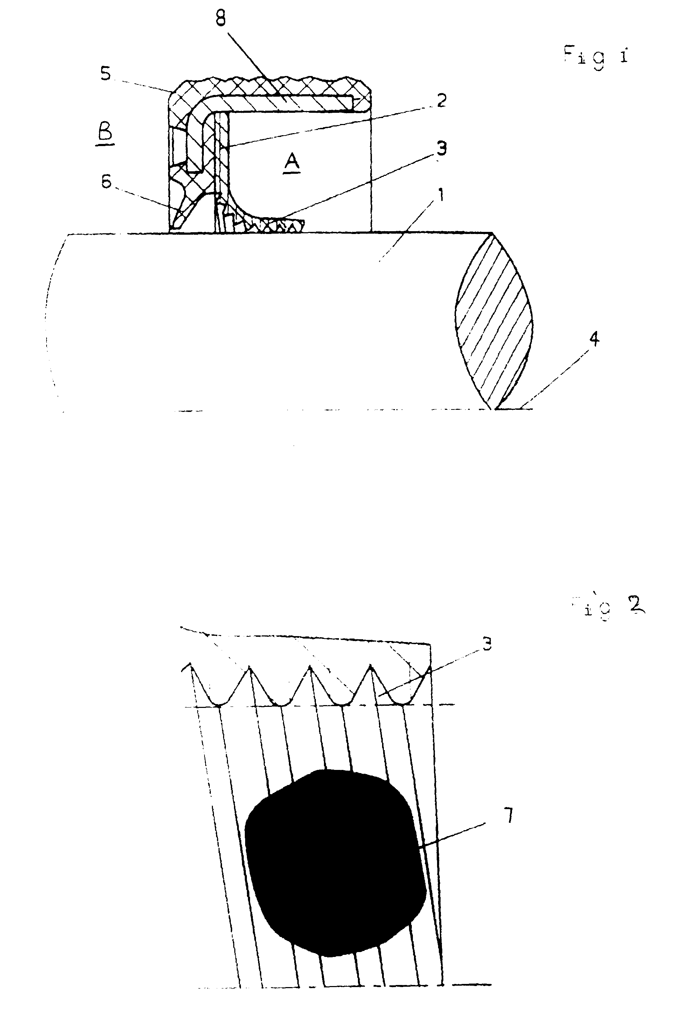

Der in Fig. 1 in halbgeschnittener Darstellung wiedergegebene Lippendichtring ist für ein relativ bewegbares Maschinenteil bestimmt, beispielsweise für eine um eine Achse rotierende Kurbelwelle einer Verbrennungskraftmaschine. Der Lippendichtring umfaßt eine flexible Dichtlippe, die einen Bestandteil einer kreisringförmigen Scheibe mit planparallelen Oberflächen bildet, die aus aus PTFE besteht. Die Scheibe ist nach Art des Schalltrichters einer Trompete verformt und im Bereich ihres kleinsten Durchmessers während der bestimmungsgemäßen Verwendung in Richtung des abzudichtenden Raums vorgezogen. Sie berührt mit diesem Bereich zugleich die Oberfläche der abzudichtenden Kurbelwelle. Der größte Durchmesser der kreisringförmigen Scheibe ist an einem Versteifungsring 8 aus metallischem Werkstoff festgelegt, beipielsweise durch Ankleben, Anvulkanisieren oder Einklemmen.

Der Versteifungsring 8 ist teilweise in eine Umhüllung 5 aus Gummi eingebettet welche die Oberfläche der abzudichtenden Kurbelwelle 1 auf der der Außenluft zugewandten Seite mit einer umlaufenden Staublippe 6 anliegend berührt. Die Dichtlippe 2 ist im Bereich des Dichtspalts mit einer die abzudichtende Kurbelwelle auf ihrem gesamten Außenumfang umschließenden, schraubengangförmigen Drallstufe 3 versehen, die eine Drallnut begrenzt. Diese schließt, in Umfangsrichtung betrachtet, mit der Achse 4 der Kurbelwelle 1 einen spitzen Winkel ein. Die Neigungsrichtung der Drallstufe 3 ist so festgelegt, daß sich bei rotierender Kurbelwelle 1 im Bereich der Drallstufe 3 eine Förderwirkung in Richtung des abzudichtenden Raums A ergibt. Leckflüssigkeit, die den Dichtspalt bei stillstehender Kurbelwelle 1 in Richtung der Außenseite B passiert, wird dadurch bei erneut einsetzender Rotationsbewegung der Kurbelwelle 1 zurück in den abzudichtenden Raum A gefördert.

Bei dem in Fig. 1 gezeigten Ausführungsbeispiel ist die Dichtlippe 2 mit nur einer einzigen Drallstufe versehen, die die abzudichtende Kurbelwelle 1 nach Art einer Helix auf ihrem gesamten Außenumfang umschließt. Zum Verhindern von Druckverlusten durch die der Drallstufe nach dem Einbau vorgelagerte Lücke hindurch, d.h. die Nut, ist es daher ausreichend, wenn die Drallstufe an einer einzigen Umfangsstelle 4 (Fig. 2) durch Wachs 7 verschlossen ist, beispielsweise Stearin. Es versteht sich von selbst, daß das Wachs an einer Stelle in die Drallstufe eingebracht werden muß, die sich im Dichtspalt befindet, und daß die Menge den freien Querschnitt der Nut völlig ausfüllen muß. Die Menge des eingefüllten Wachses 7 soll daher so bemessen sein, daß der Dichtspalt durch das Wachs 7 völlig verschlossen ist. Wird im Anschluß an die Montage des Lippendichtrings eine Druckprüfung vorgenommen, dann wird die Dichtlippe durch den im abzudichtenden Raum ansteigenden Druck an die abzudichtetnde Welle angepreßt, was die Abdichtwirkung erhöht. Auch im Bereich der Drallstufe kann keinerlei Druckgas entweichen. Der Gasdruck bleibt damit weitgehend konstant auf gleicher Höhe erhalten, was ein sicheres Indiz dafür ist, daß der Einbau des Dichtrings ordnungsgemäß erfolgt ist.

Während der bestimmungsgemäßen Verwendung entsteht im Dichtspalt zwischen der Dichtlippe 2 und der Oberfläche der rotierenden Kurbelwelle 1 Wärme. Das den Dichtspalt verschließende Stearin wird dadurch verflüssigt und in Richtung des abzudichtenden Raums A gefördert. Die Drallstufe kann dadurch anschließend voll dem Zweck gerecht werden, für den sie vorgesehen ist, nämlich die Rückförderung von Leckflüssigkeit in den abgedichteten Raum.

Ergibt sich demgegenüber bei der Montage des Lippendichtrings gemäß Fig. 1 eine Einbaulage der Dichtlippe 2, bei der das vorstehende Ende in Richtung der Außenseite B vorgewölbt ist, dann wird die Dichtlippe 2 im Bereich ihres Innenumfangs durch den während der Druckpfrüfung eingestellten Kontrolldruck nicht an die Oberfläche der abzudichtenden Kurbelwelle 1 angepreßt sondern von dieser abgehoben. Die Kontrolluft kann dadurch sehr schnell aus dem abgedichteten Raum A entweichen, was ein sicheres Indiz dafür ist, daß der Lippendichtring fehlerhaft eingebaut ist. Es läßt sich dadurch austauschen, bevor weitere Schäden entstehen.

## Patentansprüche

1. Lippendichtring für ein relativ bewegbares Maschinenteil (1), umfassend eine flexible Dichtlippe (2) aus polymerem Werkstoff, die den Maschinenteil (1) im Bereich eines Dichtspalts unter einer elastischen Vorspannung anliegend berührt, wobei der Dichtspalt an zumindest einer Umfangsstelle von einer Drallstufe (3) in Längsrichtung durchdrungen ist, die der Achse (4) des Maschinenteils (1) unter einem spitzen Winkel zugeordnet ist und der eine Lücke vorgelagert ist, dadurch gekennzeichnet, daß der Dichtspalt zumindest im Bereich der der Drallstufe (3) vorgelagerten Lücke durch Wachs (7) verschlossen ist.

2. Lippendichtring nach Anspruch 1, dadurch gekennzeichnet, daß die Drallstufe (3) eine dem Maschinenteil (1) zugewandte Dichtfläche der Dichtlippe (2) unterbricht.

3. Lippendichtring nach Anspruch 1 bis 2, dadurch gekennzeichnet, daß die Drallstufe (3) das Maschinenteil (1) nach Art einer Helix zumindest teilweise in Umfangsrichtung umschließt.

4. Lippendichtring nach Anspruch 2 bis 3, dadurch gekennzeichnet, daß die Dichtlippe (2) aus PTFE besteht.

5. Lippendichtring nach Anspruch 4, dadurch gekennzeichnet, daß die Dichtlippe (2) nach Art des Schalltrichters einer Trompete gestaltet ist, der im Bereich seines kleinsten Durchmessers den relativ bewegbaren Maschinenteil (1) anliegend berührt und der im Bereich seines größten Durchmessers an einem Versteifungsring (8) festgelegt ist.

6. Lippendichtring nach Anspruch 1 bis 5, dadurch gekennzeichnet, daß die Drallstufe (3) einen Bestandteil einer Drallnut bildet.

## Claims

1. A lip seal ring for a relatively movable machine part (1), comprising a flexible sealing lip (2) which is made from polymeric material and bears against the machine part (1) with elastic prestress in the area of a sealing gap, a turbulence stage (3) penetrating through the sealing gap in the longitudinal direction at at least one circumferential location, which turbulence stage is arranged at an acute angle to the axis (4) of the machine part (1) and has an opening ahead of it, characterized in that the sealing gap is closed by wax (7) at least in the area of the opening ahead of the turbulence stage (3).

2. A lip seal ring according to claim 1, characterized in that the turbulence stage (3) interrupts a sealing surface, which faces towards the machine part (1), of the sealing lip (2).

3. A lip seal ring according to either of claims 1 and 2, characterized in that the turbulence stage (3) surrounds at least part of the machine part (1), in the form of a helix, in the circumferential direction.

4. A lip seal ring according to either of claims 2 and 3, characterized in that the sealing lip (2) consists of PTFE.

5. A lip seal ring according to claim 4, characterized in that the sealing lip (2) is designed in the form of the bell mouth of a trumpet which, in the area of its smallest diameter, bears against the relatively movable machine part (1) and, in the area of its largest diameter, is fixed to a reinforcement ring (8).

6. A lip seal ring according to any of claims 1 to 5, characterized in that the turbulence stage (3) forms an element of a helical groove.

## Revendications

1. Joint à lèvres pour une pièce (1) de machine relativement mobile, comprenant une lèvre d'étanchéité (2) flexible en matière polymère qui est en contact étroit avec la pièce (1) de machine, sous l'effet d'une précontrainte élastique, dans la région d'une fente d'étanchéité, la fente d'étanchéité étant traversée dans la direction longitudinale, en au moins un endroit de la circonférence, par un gradin hélicoïdal (3) qui est disposé de manière à former un angle aigu avec l'axe (4) de la pièce (1) de machine et devant lequel est situé un creux, caractérisé en ce que la fente d'étanchéité est fermée par de la cire (7) au moins dans la région des creux situés avant le gradin hélicoïdal (3).

2. Joint à lèvres selon la revendication 1, caractérisé en ce que le gradin hélicoïdal (3) interrompt une surface d'étanchéité de la lèvre d'étanchéité (2) située du côté de la pièce (1) de machine.

3. Joint à lèvres selon l'une des revendications 1 à 2, caractérisé en ce que le gradin hélicoïdal (3) entoure la pièce (1) de machine à la manière d'une hélice au moins partiellement dans la direction circonférentielle.

4. Joint à lèvres selon l'une des revendications 2 à 3, caractérisé en ce que la lèvre d'étanchéité (2) est en PTFE.

5. Joint à lèvres selon la revendication 4, caractérisé en ce que la lèvre d'étanchéité (2) est exécutée de manière à avoir la forme d'un pavillon de trompette qui est en contact étroit avec la pièce (1) de machine relativement mobile dans la région de son plus petit diamètre et est fixé sur une bague de renfort (8) dans la région de son plus grand diamètre.

6. Joint à lèvres selon l'une des revendications 1 à 5, caractérisé en ce que le gradin hélicoïdal (3) forme une partie d'une rainure hélicoïdale.
